# EUROPÄISCHE PATENTANMELDUNG

(11) **EP 0 899 055 A2**
(43) Veröffentlichungstag der Anmeldung: **03.03.1999**
(21) Anmeldenummer: 98116043.5
(22) Anmeldetag: 25.08.1998
(51) Int. Cl.: B23Q 1/28, B23Q 1/58

(54) **Bremsvorrichtung für einen Linearantrieb**

(30) Priorität: 26.08.1997 DE 19737120
(71) Anmelder: Chr. Mayr GmbH & Co. KG, D-87665 Mauerstetten (DE)
(72) Erfinder: Dropmann, Christoph, 87600 Kaufbeuren (DE); Hable, Günter, 87719 Oberauerbach (DE)
(74) Vertreter: Ruschke, Hans Edvard, Dipl.-Ing.

(57) **Zusammenfassung**

Bremsvorrichtung für Linearantriebe zur Befestigung an einem gegenüber einer Gegenreibfläche (9) translatorisch verschieblichen Maschinenelement, z.B. einem Schlitten, mit einem ersten (11) und einem zweiten (12) Spulenträger mit jeweils einer Magnetspule (27, 27'), wobei die Spulenträger (11, 12) über Befestigungsmittel (41) aneinander gekoppelt sind, mit einer gegenüber den Spulenträgern (11, 12) in Richtung auf die Gegenreibfläche verschieblichen Ankerscheibe (21) mit einem daran angebrachten Reibbelag (22), mit einer in jedem Spulenträger (11, 12) angeordneten Federsäule (35, 35'), die auf die Ankerscheibe drückt, und mit mindestens einer sich im wesentlichen in der Bewegungsrichtung beider Spulenträger (11, 12) erstreckenden Lamelle (51, 52, 53, 54), die die Ankerscheibe mit den Spulenträgern verbindet.

## Beschreibung

Die Erfindung betrifft eine elektromagnetisch gelüftete Bremsvorrichtung für Linearantriebe, die insbesondere für Anwendungen vorgesehen ist, bei denen translatorisch bewegte Maschinenbauteile entsprechend abgebremst werden müssen.

Bremsvorrichtungen zum Abbremsen von Drehbewegungen oder Linearbewegungen sind in großer Anzahl bekannt. Eine besondere Klasse bilden solche Bremsen, die für Linearantriebe vorgesehen sind und spielfrei arbeiten, d.h. bei denen die zu bremsende Vorrichtung nach dem Abbremsen spielfrei gegenüber der Bremsfläche feststehen soll.

Eine solche Bremse ist aus der EP 0 763 668 A1 bekannt, die ein an einer Werkzeugmaschine angebrachtes Bremssystem trägt, das an einem Linearmotor zum Antrieb eines Schlittens angeordnet ist. Das Bremssystem umfaßt eine an der Werkzeugmaschine angebrachte Führungsschiene für den Schlitten sowie mit Hilfe von Stiften an der Werkzeugmaschine angelenkte Arme, die gegen die Führungsschiene gedrückt werden, um das Abbremsen des Schlittens zu bewirken.

Ein Nachteil dieses Bremssystemes ist, daß die Lagerung der Arme mit Spiel behaftet ist und dieses Spiel, verstärkt über die Längserstreckung der Arme, sich auch zwischen dem Schlitten und der Führungsschiene auswirkt. Wenn nach dem Bremsvorgang der Schlitten durch die Arme an der Schiene festgeahlten wird, ist also der Schlitten nicht spielfrei an der Schiene fixiert. Ungenauigkeiten im Betrieb der Werkzeugmaschine sind die Folge.

Ein weiterer Nachteil dieses Bremssystems ist, daß beim Bruch beider Arme überhaupt keine Bremswirkung mehr erfolgt, so daß in diesem Fall eine schwere Beschädigung der Werkzeugmaschine entstehen kann.

Die vorliegende Erfindung hat demnach die Aufgabe, eine Bremsvorrichtung für Linearantriebe zu schaffen, die im Bremszustand spielfrei arbeitet.

Eine weitere Aufgabe ist es, eine Bremsvorrichtung mit einer Notbremsfunktion für den Fall bereitzustellen, daß die für die normale Funktion der Bremse vorgesehenen Glieder brechen sollten.

Diese Aufgaben werden durch die Merkmale des kennzeichnenden Teils des Anspruches 1 gelöst. Weitere Ausführungsformen sind in den Unteransprüchen angegeben.

Die erfindungsgemäße Bremsvorrichtung hat den Vorteil, daß sie ein hohes Maß an Sicherheit bietet, da selbst beim Bruch sämtlicher Übertragungslamellen noch eine Bremsung erfolgt, da die Ankerscheibe mit dem daran angebrachten Bremsbelag von dem in eine Ausnehmung der Ankerscheibe vorstehenden freien Ende eines Befestigungsmittels der Übertragungslamellen mitgenommen wird.

Ein weiterer Vorteil der erfindungsgemäßen Bremsvorrichtung ist es, daß sie im gebremsten Zustand den Schlitten spielfrei an der Bremsfläche fixiert, so daß die Bremsvorrichtung für Anwendungsfälle vorgesehen werden kann, bei denen der Schlitten eine verhältnismäßig hohe Genauigkeit zu gewährleisten hat.

Im folgenden wird die Erfindung anhand der beiliegenden Figuren beschrieben. Darin zeigt:
- Figur 1 die erfindungsgemäße Bremsvorrichtung in einem Längsschnitt, wobei die Bewegung im ungebremsten Zustand in der Zeichenebene verläuft, also in der Figur 1 horizontal nach links oder rechts;
- Figur 2 einen Querschnitt durch die erfindungsgemäße Bremsvorrichtung, wobei die rechte Hälfte des Querschnitts einen Schnitt entlang der in der Figur 1 gezeigten Linie A-A und die linke Hälfte des Querschnitts einen Schnitt entlang der Linie B-B nach der Figur 1 zeigt; und
- Figur 3 einen Horizontalschnitt entlang der in der Figur 1 dargestellten Linie C-C.

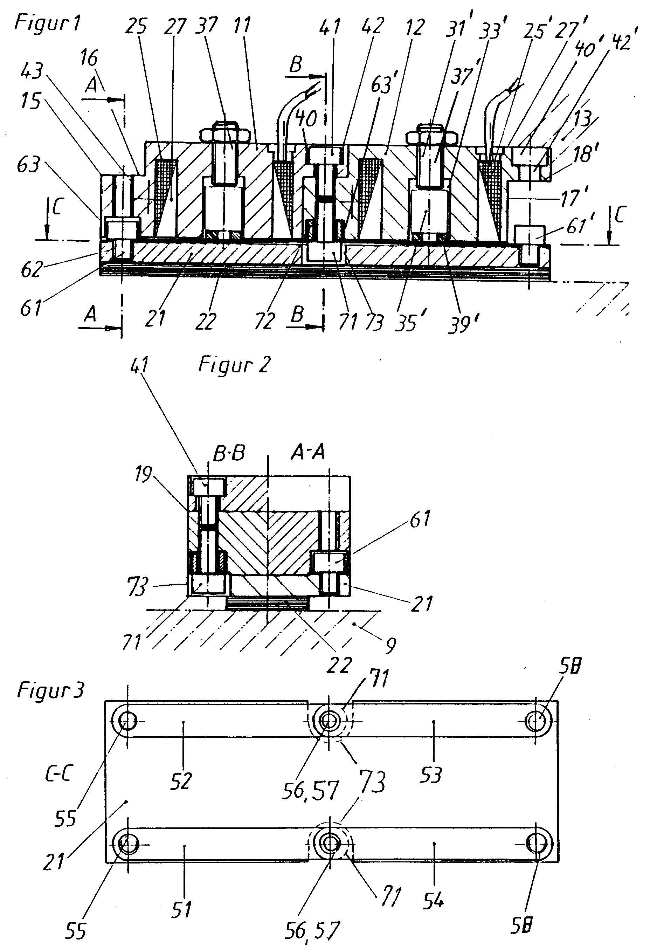

Die Figur 1 zeigt eine Bremsvorrichtung mit einem ersten Magnetkörper oder Spulenträger 11 und mit einem z. B. hinter diesem angeordneten zweiten Magnetkörper oder Spulenträger 12, der sehr weitgehend identisch aufgebaut ist. Beide Spulenträger 11, 12 werden an einem nicht näher dargestellten Maschinengestell oder einem Schlitten oberhalb einer Gegenreibfläche 9 angeordnet. Gleiche Teile des rechten Spulenträgers 12 werden (zum Teil) mit gleichen Bezugszeichen wie der linke Spulenkörper 11 identifiziert, allerdings durch einen Beistrich ergänzt (z. B. 17, 17'). Jeder Spulenträger 11, 12 weist an seiner Vorder- bzw. Rückseite ein linkes und ein rechtes Ende 15 bzw. 17 auf, wobei das rechte Ende 17 des ersten Spulenträgers 11 an dem linken Ende 15' des zweiten Spulenträgers 12 anliegt. Die Spulentrager 11, 12 sind über nicht näher dargestellte Verbindungselemente 13 mit dem vorgenannten Schlitten oder Maschinengestell einer Werkzeugmaschine oder dgl. verbunden, also mit einem Teil, das gegenüber der Gegenreibfläche 9 zuammen mit der Bremsvorrichtung translatorisch/linear beweglich ist. Die linken Enden 15, 15' jedes Spulenträgers 11, 12 weisen eine Stufe 16, 16' auf, während das rechte Ende 17, 17' der Spulenträger einen oberen Teil oder Vorsprung 18, 18' aufweist, der sich in einer gewissen Höhe über der Gegenreibfläche 9 entsprechend der Höhe der Stufe 16, 16' ein vorbestimmtes Maß parallel dazu erstreckt. Die Stufe 16' des linken Endes 15' des Spulenträgers 12 und der obere Teil oder Vorsprung 18 des rechten Endes 17 des Spulenträgers 11 sind also derart gestaltet, daß sie formschlüssig ineinandergreifen können, d.h. das jeweils linke Ende 15, 15' und das rechte Ende 17, 17' sind zueinander passend ausgebildet, um mehrere Spulenträger hintereinander zusammenbauen zu können.

Zwischen jedem Spulenträger 11, 12 und der Gegenreibfläche 9 ist eine demgegenüber vertikal verschiebliche Ankerscheibe 21 mit einem auf der Seite der Gegenreibfläche 9 gelegenen Bremsbelag 22 angeordnet. Der Bremsbelag ist auf die der Gegenreibfläche 9 zugewandte Seite der Ankerscheibe 21 vorzugsweise aufgeklebt, kann jedoch auch auf andere Weise, beispielsweise mittels üblicher Befestigungselemente an dieser angebracht sein. Die Ankerscheibe 21 ist mit den Spulenträgern 11, 12 (mit Hilfe von sich in der Bewegungsrichtung erstreckenden Lamellen 51, 52 bzw. 53, 54) in einer Weise verbunden, auf die im einzelnen noch weiter unten näher eingegangen wird.

Jeder Spulenträger 11 bzw. 12 weist eine kreisringförmige und zur Ankerscheibe 21 hin offene Vertiefung 25, 25' auf, in die eine Magnetspule 27, 27' eingefügt ist. Die Vertiefung 25, 25' kann auch andere Formen, z. B. eine Rechteckform aufweisen.

Im Zentrum eines jeden Spulenträgers 11, 12 ist eine Gewindebohrung 31, 31' vorgesehen, die in vertikaler Richtung im oberen, d. h. im von der Ankerscheibe 21 abgewandten Teil der Spulenträger 11, 12 verläuft. Die Gewindebohrung 31, 31' mündet von oben gesehen in eine Bohrung 33, 33', die einen größeren Durchmesser als die Gewindebohrung 31, 31' besitzt. Im Übergang von der Gewindebohrung 31 zur Bohrung 33 ist vorzugsweise ein stufenförmiger Übergang vorgesehen, jedoch kann dieser beispielsweise auch schräg verlaufen. Die Bohrung 33, 33' ist auf der der Ankerscheibe 21 zugewandten Seite des Spulenträgers 11, 12 offen. In der Bohrung 33, 33' ist eine Federsäule oder ein Tellerfederpaket 35, 35' angeordnet, die bzw. das von dem Spulenträger 11 bzw. 12 aus eine Druckkraft auf die Ankerscheibe 21 ausübt. Dabei kann noch ein Zwischenstück 39, 39' zwischen der Ankerscheibe 21 und dem entsprechenden Ende der Federsäule 35, 35' vorgesehen sein. Die Druckkraft der Federsäule 35, 35' in der Bohrung 33, 33' wird durch die Position der Druckschraube 37, 37' in der Gewindebohrung 31 festgelegt, weil das der Federsäule 35 zugewandte Ende der Schraube 37 an das entsprechende Ende der Federsäule 35 stößt. Ein Vorteil dieser von einer Kontermutter gesicherten Druckschraube 37 ist, daß die von der Federsäule 35, 35' ausgeübte Kraft auf die Ankerscheibe 21 einstellbar ist.

Die Spulenträger 11, 12 sind mittels zweier Schrauben 41 miteinander verbunden, von denen in Figur 1 und 2 nur eine zu sehen ist. Die andere Schraube 41 liegt (in Fig. 2) spiegelbildlich zur mittleren Schnittlinie. Dabei durchsetzt die Verbindungsschraube 41 eine entsprechende Bohrung 42 in dem oberen, von dem Spulenträger 11 vorstehenden Teil oder Vorsprung 18 des rechten Endes 17, wobei das untere Ende der Verbindungsschraube 41 in den oberen Bereich einer Gewindebohrung 43' in der Stufe 16' des linken Endes 15' des benachbarten Spulenträgers 12 eingeschraubt ist. Die Bohrung 42 kann in ihrem oberen Bereich eine vergrößerte Zylindersenkung 40 zur Aufnahme des Zylinderkopfes der Verbindungsschraube 41 aufweisen. Die zueinander benachbarten Spulenträger 11, 12 sind somit fest miteinander verbunden, wobei die Verbindungsschrauben 41 vollständig in dem Spulenträger 11 versenkt sind. Wie aus Figur 1 ersichtlich ist, sind die Spulenträger 11 bzw. 12 an ihrem linken bzw. rechten Ende entsprechend ausgebildet, um bei Bedarf weitere Spulenträger anfügen zu können.

Wie am besten aus der Figur 3 ersichtlich ist, sind zwischen der Ankerscheibe 21 und den dieser zugewandten Bodenflächen der Spulenträger 11, 12 jeweils zwei hintereinander angeordnete, langgestreckte Lamellen 51, 54 bzw. 52, 53 vorgesehen, die zusammen ein Paar ausbilden. Diese Lamellenpaare verlaufen vorzugsweise parallel zu und an den Seitenrändern der Längsseiten der Spulenträger 11, 12, so daß die Gewindebohrungen 31, 31' bzw. die Bohrungen 33, 33' zwischen den Lamellen 51, 52 bzw. 53, 54 gelegen sind. Jede Lamelle 51, 52 bzw. 53, 54 weist an ihren Enden Bohrungen 55, 56 bzw. 57, 58 auf. Dabei sind in Figur 3 die linken Bohrungen 55 der Lamellen 51, 52 nahe dem jeweils linken Ende 15 des Spulenträgers 11 gelegen, und entsprechend befinden sich die linken Bohrungen 56 der Lamellen 53, 54 nahe dem linken Ende 15' des rechten Spulenträgers 12. Die anderen Enden der Lamellen 51, 52 bzw. 53, 54 ragen in Längsrichtung gesehen über das jeweils rechte Ende 17, 17' der Spulenträger 11, 12 so weit hinaus, daß die dort gelegenen, rechten Bohrungen 56 bzw. 58 unterhalb der bzw. koaxial zur Bohrung 42, 42' in dem oberen Teil/Vorsprung 18, 18' des rechten Endes 17, 17' der Spulenträger 11, 12 liegen.

Jede Lamelle 51, 52 bzw. 53, 54 ist mittels einer Befestigungsschraube 61, 61' an der Ankerscheibe 21 befestigt, wobei das Gewinde der Befestigungsschrauben 61, 61' von oben in eine entsprechende Gewindebohrung 62, 62' in der Ankerscheibe 21 hineingreift. Die Gewindebohrung 62 befindet sich an demjenigen Ende der Ankerscheibe 21, das am linken Ende 15 des ersten Spulenträgers 11 gelegen ist; die Gewindebohrung 62' liegt auf der entgegengesetzten Seite am rechten Ende 17' des Spulenträgers 12. Um den im Bereich des ersten Spulenträgers 11 gelegenen zylindrischen Kopf der Befestigungsschraube 61 aufzunehmen, ist an der entsprechenden Stelle des ersten Spulenträgers 11 eine Ausnehmung oder zylindrische Senkung 63 vorgesehen, die sich zur Ankerscheibe 21 hin öffnet und von unten in die Stufe 16 des linken Endes 15 des ersten Spulenträgers 11 hineinragt. Die zylindrische Senkung 63 mündet nach oben in die damit koaxiale Gewindebohrung 43, die einen kleineren Durchmesser aufweist und die Stufe 16 durchsetzt. Die Gewindebohrung 43 ist in ihrem oberen Bereich für eine weitere Verbindungsschraube entsprechend dem Bezugszeichen 41 vorgesehen, falls ein weiterer Spulenträger in Fig. 1 links davon angeschlossen würde.

Die Lamellen 51, 52 unterhalb des ersten Spulenträgers 11 sind an deren zweiten Bohrungen 56 mittels jeweils einer Befestigungsschraube 71 an der Stufe 16' des linken Endes 15' des Spulenträgers 12 befestigt. Die Befestigungsschrauben 71 ragen von unten in den unteren Teil der Gewindebohrung 43' hinein, wobei der Kopf der Befestigungsschraube 71 axial außerhalb der Senkung 63' des zweiten Spulenträgers 12 bleibt, so daß er im wesentlichen im Bereich der Ankerscheibe 21 gelegen ist. Zu diesem Zweck weist die Ankerscheibe 21 eine seitliche U-förmige Ausnehmung 73 auf, die auch als Bohrung ausgebildet sein kann und einen geringfügig größeren Durchmesser besitzt als der Kopf der Befestigungsschraube 71. In der Senkung oder Ausnehmung 63' der Stufe 16' ist eine Hülse 72 vorgesehen, die im wesentlichen der Tiefe und dem Durchmesser der Senkung oder Ausnehmung 63' in 16' entspricht und so den Kopf der Befestigungsschraube 71 in den Bereich der Ankerscheibe 21 vorstehen läßt. Auf diese Weise bildet der zylindrische Kopf der Befestigungsschraube 71 eine Notfall-Sicherung gegen eine Längsverschiebung der Ankerscheibe 21 gegenüber den Spulenträgern 11 und 12, und zwar für den Fall, daß die Lamellen 51, 52, 53, 54 ganz oder teilweise brechen sollten.

Die Befestigungsschrauben 71 durchsetzen zugleich die Bohrungen 56, 57 der Lamellen 51, 52 bzw. 53, 54 und verbinden letztere auf diese Weise mit dem linken Ende 15' bzw. mit der Stufe 16' des zweiten Spulenträgers 12. Somit sind die inneren Enden sämtlicher Lamellen durch die Befestigungsschrauben 71 an der Unterseite der Stufe 16' des zweiten Spulenträgers 12 befestigt. Außerdem sind die äußeren Enden der Lamellen 51 bis 54 mittels der Befestigungsschrauben 61, 61' an den Rändern der Ankerscheibe 21 befestigt.

Somit ist die Ankerscheibe 21 mit ihrem Bremsbelag 22 mit Hilfe der Lamellen gegenüber den Spulenträgern 11, 12 in einem beschränkten Maße vertikal verschieblich angeordnet, wobei der tatsächliche Abstand der Ankerscheibe 21 von den Spulenträgern durch das Zusammenwirken der Magnetspulen mit den Federsäulen bestimmt wird.

Aus der Darstellung der Figur 1 und der obigen Beschreibung geht hervor, daß die Anordnung aus den Spulenträgern 11, 12 und der Ankerscheibe 21 um weitere solche Anordnungen ergänzt werden kann, so daß die Bremsvorrichtung bausteinartig erweiterbar ist. Ein Vorteil dieser Erweiterbarkeit ist, daß die Bremskraft der Vorrichtung problemlos an den vorgesehenen Anwendungsfall angepaßt werden kann.

Im folgenden wird die Funktionsweise der Bremsvorrichtung beschrieben:

In Figur 1 ist der bestromte bzw. gelöste Zustand der Bremsvorrichtung dargestellt, bei dem die Magnetspulen 27, 27' die Ankerscheibe gegen den Druck der Federsäulen anziehen. Die Ankerscheibe und die Lamellen liegen also an der Unterseite der beiden Spulenträger an.

Die Bremsvorrichtung wird durch Abschalten der Magnetspulen ausgelöst. Die Magnetspulen üben dann keine Anziehungskraft mehr auf die Ankerscheibe aus, so daß die mittig angeordneten Federsäulen die Ankerscheibe von den Spulenträgern weg und zur Gegenreibfläche 9 hin drücken. Dadurch wird die Bremswirkung an der Gegenreibfläche hervorgerufen.

Die Lamellen 51 bis 54 können entweder eben sein oder so (in Längsrichtung) leicht vorgekrümmt sein, daß sie die Ankerscheibe von sich aus entweder wegdrücken oder zusätzlich gegen die Spulenträger vorspannen: Wenn die Magnetspulen bestromt werden, um die Ankerscheibe an die Spulenträger zu ziehen, können die Lamellen also aufgrund ihrer entsprechenden Federwirkung bzw. Steifigkeit dieses Anziehen der Ankerscheiben unterstützen. Alternativ dazu kann vorgesehen werden, daß die Lamellen aufgrund ihrer entgegengesetzten Vorspannung das von den Federsäulen veranlasste Abfallen unterstützen. Außerdem können vorzugsweise zur weiteren Unterstützung dieser Vertikalbewegung der Ankerplatte 21 die Magnetspulen für eine begrenzte Zeitspanne mit Überspannung erregt werden, um den zwischen der Ankerscheibe 21 und der Unterseite der Spulenträger befindlichen Luftspalt besonders effektiv zu überwinden, der durch die weggedrückte Ankerscheibe erzeugt wird.

Die Ankerscheibe ist über die Befestigungsschrauben 61, 61' mit den Lamellen verbunden, die ihrerseits durch die zwei Befestigungsschrallben 71 mit den Spulenträgern 11, 12 verbunden sind, d. h. der Hub der Ankerscheibe ist zwar begrenzt, aber diese Begrenzung würde erst wirksam werden, wenn sich die Ankerscheibe über die Gegenreibfläche 9 hinaus bewegen würde bzw. könnte. Damit die Ankerscheibe in vertikaler Richtung auf einen vorbestimmten Hub zwangsweise beschränkt ist, kann eine nicht dargestellte Schraube zur Begrenzung dieser Vertikalbewegung vorgesehen sein. Diese Begrenzungsschraube dient auch der leichteren Montage der gesamten Bremsvorrichtung, da sie dadurch besonders einfach als komplette Einheit gehandhabt und montiert werden kann. Weiterhin wird durch die Begrenzungsschraube verhindert, daß im unmontierten Zustand der Bremsvorrichtung, d. h. wenn sie noch nicht über einer Gegenreibfläche angeordnet ist, eine Überlastung oder ungewollte Verformung der Lamellen auftreten kann. Die Befestigung der Ankerscheibe 21 an den Spulenträgern 11, 12 mittels der Lamellen und der Befestigungsschrauben 61, 61', 71 bewirkt jedoch, daß die Ankerscheibe in Längsrichtung gegenüber den Spulenträgern 11, 12 (in Figur 1 nach links bzw. rechts) unbeweglich ist. Dadurch wird ein spielfreies Bremsen sichergestellt.

Beim Bremsen werden (je nach der Bewegungsrichtung der Spulenträger gegenüber der Reibfläche) entweder die Lamellen 51, 52 oder die Lamellen 53, 54 auf Zug oder Druck belastet. Die in der Verlängerung der Lamellen 51, 52 angeordneten Lamellen 53, 54 werden beim Bremsen entgegengesetzt zu den erstgenannten Lamellen belastet, also z. B. die Lamellen 51, 52 auf Druck und die Lamellen 53, 54 auf Zug. Dadurch wird die Gefahr eines Knickens der jeweils auf Druck belasteten Lamellen verringert.

Falls eine der Lamellen bricht, übernehmen die restlichen noch intakten Lamellen die Funktion der translatorischen Fixierung der Ankerscheibe gegenüber den Spulenträgern.

Falls sämtliche Lamellen brechen, bewirkt zumindest der in die zwei U-förmigen Ausnehmungen 73 der Ankerscheibe 21 hineinragende zylindrische Kopf der Befestigungsschrauben 71 eine sichere Bremsung, da dieser Kopf sich dann an die Umrandung der U-förmigen Ausnehmungen 73 anlegt, so daß auf diese Weise die Ankerscheibe und der daran befestigte Reibbelag mit den Spulenträgern mitgenommen wird.

Alternativ oder zusätzlich zu der beschriebenen bevorzugten Ausführungsform kann die erfindungsgemäße Bremsvorrichtung noch folgende Merkmale aufweisen:

Statt einer Ankerscheibe 21 können auch zwei Ankerscheiben vorgesehen sein, die in Längsrichtung hintereinander angeordnet sind. Diese sind dann vorzugsweise an einer weiteren Stelle an den entsprechenden Lamellen 51 bis 54 befestigt.

Die Verbindung der Spulenträger 11, 12 untereinander kann anstatt über die Verbindungsschrauben 41 auch anders bewerkstelligt werden. So kann diese Verbindung durch andersartige Verbindungselemente oder auch mittels einer formschlüssigen Verbindung aus zueinander komplementären Formteilen realisiert sein.

Statt zweier in Längsrichtung des Spulenträgers hintereinander angeordneter Lamellen kann auch nur eine langgestreckte Lamelle auf jeder Seite angeordnet sein, die an ihren entgegengesetzten Enden jeweils eine Bohrung und in der Mitte eine weitere Bohrung besitzt. Diese mittlere Bohrung dient dazu, diese alternative Lamelle mittels der Befestigungsschrauben 71 an dem zweiten Spulenträger 12 zu befestigen.

Eine Befestigung der Lamellen 51 bis 54 mittels der Befestigungsschraube 71 kann auch an dem ersten Spulenträger vorgesehen sein. Allerdings könnte in diesem Fall die Schraube 71 nicht koaxial zur Schraube 41 bzw. zur Gewindebohrung 43' verlaufen.

Statt der in der Figur 1 dargestellten zwei Spulenträger kann die Bremsvorrichtung auch nur einen Spulenträger oder auch mehr als zwei Spulenträger aufweisen.

Die Anzahl und die Anordnung der Federpakete 35, 35' kann je nach Anwendungsfall variieren. Beispielsweise können die Federpakete auch paarweise oder außerhalb der Lamellen angeordnet sein. Auch kann statt des Tellerfederpaketes oder neben den Tellerfederpaketen ein anderes Mittel vorgesehen werden, das Druck ausübt, z. B. eine Schraubenfeder.

### Bezugszeichenliste

- 9: Gegenreibfläche
- 11: erster/linker Spulenkörper
- 12: zweiter/rechter Spulenkörper
- 13: Verbindugselemente zur WZM
- 15, 15': erstes/linkes Ende von 11, 12
- 16, 16': Stufe an 15, 15'
- 17, 17': zweites/rechtes Ende von 11, 12
- 18, 18': oberer Teil/Vorsprung von 17, 17'
- 21: Ankerscheibe
- 22: Bremsbelag
- 25, 25': Vertiefung für 27, 27'
- 27, 27': Magnetspule
- 31, 31': Gewindebohrung für 37, 37'
- 33, 33': Bohrung für 35, 35'
- 35, 35': Tellerfederpaket/Federsäule
- 37, 37': Durck- Schraube für 35, 35'
- 39, 39': Zwischenstück
- 40, 40': Zylindersenkung von 42, 42'
- 41: Verbindungsschrauben für 11, 12
- 42, 42': Bohrung für 41
- 43, 43': Gewindebohrung in 16, 16'
- 51: Lamelle
- 52: Lamelle
- 53: Lamelle
- 54: Lamelle
- 55: linke Bohrung von 51, 52
- 56: rechte Bohrung von 51, 52
- 57: linke Bohrung von 53, 54
- 58: rechte Bohrung von 53, 54
- 61, 61': Befestigungsschraube
- 62, 62': Gewindebohrung für 61, 61'
- 63, 63': Ausnehmung/Senkung
- 71: Befestigungsschrauben
- 72: Hülse für 63' in 16'
- 73: seitliche U-förmige Ausnehmung in 21

## Patentansprüche

1. Bremsvorrichtung für Linearantriebe zur Befestigung an einem gegenüber einer Gegenreibfläche (9) translatorisch verschieblichen Maschinenteil oder Schlitten, mit
- wenigstens einem ersten (11) und einem zweiten (12) Spulenträger mit jeweils einer Magnetspule (27, 27'), wobei jeder Spulenträger (11, 12) ein in Bewegungsrichtung gesehen erstes (15, 15') und ein zweites (17, 17') Ende aufweist und die Spulenträger (11, 12) über Befestigungsmittel (41) aneinander gekoppelt sind,
- einer gegenüber den Spulenträgern (11, 12) in Richtung auf die Gegenreibfläche (9) verschieblichen Magnet-Ankerscheibe (21) mit einem daran angebrachten Reibbelag (22),
- wenigstens einer in jedem Spulenträger (11, 12) angeordneten Federsäule (35, 35'), die auf die Ankerscheibe (21) drückt, und
- wenigstens einer sich im wesentlichen in der Bewegungsrichtung beider Spulenträger (11, 12) erstreckenden Lamelle (51, 52, 53, 54), die einerseits im Bereich des ersten Endes (15) des ersten Spulenträgers (11) und im Bereich des zweiten Endes (17') des zweiten Spulenträgers (12) an der Ankerscheibe (21) und andererseits in ihrer Mitte an einem Spulenträger (11, 12) mittels einer Befestigungsschraube (71) befestigt ist.

2. Bremsvorrichtung für Linearantriebe nach Anspruch 1, dadurch gekennzeichnet, daß die Befestigungsschraube (71) von unten in den zweiten Spulenträger (12) eingeschraubt ist und der Kopf der Befestigungsschraube (71) im Bereich einer Ausnehmung (73) der Ankerscheibe (21) liegt.

3. Bremsvorrichtung für Linearantriebe nach Anspruch 1 oder 2, dadurch gekennzeichnet, daß insgesamt zwei zueinander parallel verlaufende Lamellen (51, 52, 53, 54) vorgesehen sind.

4. Bremsvorrichtung für Linearantriebe nach Anspruch 1, oder 2, dadurch gekennzeichnet, daß insgesamt vier Lamellen (51, 52, 53, 54) vorgesehen sind, von denen jeweils zwei parallel zueinander verlaufen und jeweils zwei in Längsrichtung hintereinander angeordnet sind.

5. Bremsvorrichtung für Linearantriebe nach einem oder mehreren der voranstehenden Ansprüche, dadurch gekennzeichnet, daß die beiden Spulenträger (11, 12) mittels einer stufenförmigen Stoßfläche (18, 16') formschlüssig aneinander anliegen.

6. Bremsvorrichung für Linearantriebe nach einem oder mehreren der voranstehenden Ansprüche, dadurch gekennzeichnet, daß jeder Spulenträger (11, 12) an seinem ersten Ende (15, 15') eine Stufe (16, 16') aufweist und an seinem zweiten Ende (17, 17') einen sich über der Stufe (16) eines benachbarten Spulenträgers (12) erstreckenden oberen Teil (18, 18') aufweist.

7. Bremsvorrichtung für Linearantriebe nach einem oder mehreren der voranstehenden Ansprüche, dadurch gekennzeichnet, daß eine senkrecht verlaufende Bohrung (42, 42') in dem oberen Teil (18, 18') vorgesehen ist, die koaxial zu einer Gewindebohrung (43, 43') in der Stufe (16, 16') verläuft, so daß die Bohrungen (42, 42'; 43, 43') einerseits zur Verschraubung der Spulenträger (11, 12) mittels einer Verbindungsschraube (41) und andererseits zur Befestigung der wenigstens einen Lamelle (51, 52, 53, 54) an dem zweiten Spulenträger (12) geeignet ist.

8. Bremsvorrichtung für Linearantriebe nach einem oder mehreren der voranstehenden Ansprüche, dadurch gekennzeichnet, daß die Magnetspulen (27, 27') zu Beginn der Betätigung der Bremsvorrichtung für eine vorbestimmte Zeit durch Übererregung bestromt werden.

9. Bremsvorrichtung für Linearantriebe, nach einem oder mehren der voranstehenden Ansprüche, bei der mehrere derartige Bremsvorrichtungen miteinander verbunden werden.
